# EUROPÄISCHE PATENTSCHRIFT

(11) **EP 3 026 684 B1**
(45) Veröffentlichungstag und Bekanntmachung des Hinweises auf die Patenterteilung: **15.11.2017**
(21) Anmeldenummer: 14195289.5
(22) Anmeldetag: 27.11.2014
(51) Int. Cl.: H01F 38/14

(54) **Sendespule für ein kontaktloses Energieübertragungssystem mit verbesserter Kopplung und verbessertem Streufeld**
Transmission coil for a contactless energy transmission system with improved antiferromagnetically coupling film and improved stray field
Bobine émettrice pour un système de transfert d'énergie sans contact ayant un couplage et un champ de dispersion améliorés

(43) Veröffentlichungstag der Anmeldung: 01.06.2016
(73) Patentinhaber: Brusa Elektronik AG, 9466 Sennwald (CH)
(72) Erfinder: Muntean, Adina, 9473 Gams (CH)
(74) Vertreter: Rösler, Frank

(56) Entgegenhaltungen:
- DE-A1-102013 010 695
- US-A1- 2003 098 496
- US-A1- 2011 050 382
- US-A1- 2014 011 447
- US-A1- 2014 125 140
- ZHU DUAN ET AL: "Rectangular coils optimization for wireless power transmission", RADIO SCIENCE, Bd. 47, Nr. 3, 1. Juni 2012 (2012-06-01), Seiten n/a-n/a, XP055191144, ISSN: 0048-6604, DOI: 10.1029/2011RS004970
- H. GREENHOUSE: "Design of Planar Rectangular Microelectronic Inductors", IEEE TRANSACTIONS ON PARTS, HYBRIDS, AND PACKAGING, Bd. 10, Nr. 2, 1. Juni 1974 (1974-06-01), Seiten 101-109, XP055191147, ISSN: 0361-1000, DOI: 10.1109/TPHP.1974.1134841

## Beschreibung

Die Erfindung betrifft eine Sendespule für ein kontaktloses Energieübertragungssystem, umfassend eine Wicklung mit mehreren Windungen zumindest eines Stromleiters. Die Wicklung belegt dabei einen Ringbereich zwischen einem außenliegenden größeren ungleichseitigen Rechteck und einem innenliegenden, kleineren, ungleichseitigen Rechteck. Zudem betrifft die Erfindung einen Sender mit einer solchen Sendespule. Schließlich betrifft die Erfindung auch ein Energieübertragungssystem mit einer solche Sendespule / einem solchen Sender sowie eine in einem Kraftfahrzeug eingebaute Empfangsspule.

Kontaktlose Energieübertragungssysteme für elektrische Energie sind grundsätzlich bekannt. Dabei wird mit einer Sendespule ein Magnetfeld erzeugt, das in einer gegenüberliegend angeordneten Empfangsspule einen Strom erzeugt, der entweder direkt zum Betrieb eines elektrischen Geräts oder aber zum Laden eines Akkumulators genutzt wird.

Beispielsweise ist in der US20140125140A1 ein System zur drahtlosen Energieübertragung offenbart, mit besonderem Augenmerk auf Anordnungen für Induktionsspulen in einem drahtlosen Energieübertragungssystem. Ein spezieller Aspekt dabei ist eine Sendeschaltung zur Ausgabe eines zeitveränderlichen Signals und einer leitfähigen Struktur zur Erzeugung eines elektromagnetischen Feldes zur drahtlosen Energieübertragung. Die leitende Struktur hat einen rechteckigen Formfaktor, deren konkrete vorteilhafte Gestaltung - eine Breite a und eine Länge a + b, wobei a durch b geteilt im Wesentlichen gleich a + b durch a dividiert sein soll - im Vordergrund steht. Konkrete Merkmale der Wicklung selbst, insbesondere deren relative Breite oder Höhe, werden dabei nicht beachtet.

Generell werden eine möglichst gute Kopplung zwischen den beiden Spulen beziehungsweise ein geringes von der Sendespule emittiertes Streufeld angestrebt, um die Energie effizient übertragen zu können. Zudem soll ein solches System auch elektromagnetisch verträglich sein. Insbesondere betrifft dies den Ladevorgang von Elektrokraftfahrzeugen, der im Hinblick auf die auftretenden Leistungen besonders effizient sein sollte und von dem auch wegen der sich im Bereich von Kraftfahrzeugen aufhaltenden Menschen und Tieren nur eine geringe Gefahr ausgehen soll. Starke und weit streuende elektromagnetische Felder können nämlich ein Gesundheitsrisiko für Mensch und Tier darstellen.

Eine Aufgabe der Erfindung ist es daher, eine verbesserte Sendespule, einen verbesserten Sender sowie ein verbessertes Energieübertragungssystem anzugeben. Insbesondere soll die Kopplung zwischen Sendespule und Empfangsspule verbessert werden, und es soll im Speziellen auch nur ein geringes Streufeld von der Sendespule ausgehen.

Die Aufgabe wird durch die Merkmale der unabhängigen Ansprüche gelöst. Vorteilhafte Weiterbildungen sind in den Figuren und in den abhängigen Patentansprüchen dargelegt.

Gemäss der Erfindung ist der Ringbereich der Sendespule auf der längeren Seite des außenliegenden Rechtecks breiter als auf dessen kürzerer Seite.

Das heißt, die Breite des zwischen dem inneren und dem äußeren Rechteck liegenden Ringbereichs ist auf der längeren Seite des außenliegenden Rechtecks größer als auf dessen kürzerer Seite. Mit anderen Worten ist die Breitendifferenz zwischen dem inneren und dem äußeren Rechteck größer als die die Höhendifferenz zwischen den beiden.

Gemäss der Erfindung umfasst der Sender eines Energieübertragungssystems eine solche Sendespule, die vorteilhaft mehrere Stromleiter aufweist, welche an mehrere verschiedene und unabhängig voneinander schalt- und/oder steuerbare Stromversorgungen angeschlossen sind.

Gemäss der Erfindung umfasst ein Energieübertragungssystem eine Sendespule oder einen Sender der oben genannten Art sowie eine in ein Kraftfahrzeug einbaubare Empfangsspule.

Gemäss der Erfindung wird eine Sendespule der oben genannten Art schließlich zur Ladung eines in einem Kraftfahrzeug angeordneten Akkumulators verwendet.

Durch die vorgeschlagenen Maßnahmen wird die Kopplung zwischen Sendespule und Empfangsspule verbessert, und es geht auch nur ein geringes Streufeld von der Sendespule aus. Damit wird der Wirkungsgrad der Energieübertragung verbessert, was insbesondere für große zu übertragende Leistungen relevant ist, so wie sie beispielsweise beim Laden eines Elektrokraftfahrzeugs auftreten. Ein weiterer Aspekt ist auch das nur geringe von der Sendespule emittierte Streufeld, wodurch gesundheitliche Auswirkungen durch das elektromagnetische Feld vermieden oder wenigstens verringert werden können.

Im Falle mehrerer verwendeter Stromversorgungen kann zudem die über die Sendespule übertragene Leistung besonders gut eingestellt werden, indem eine beliebige Anzahl der Stromversorgungen betrieben wird. Durch die Abschaltung von nicht benötigten Stromversorgungen bei kleinen Übertragungsleistungen können die Verluste bei der Energieübertragung gering gehalten werden.

Die Kopplung gibt generell das Verhältnis zwischen dem vom Sender ausgehenden magnetischen Fluss und dem durch den Empfänger gehenden magnetischen Fluss an und kann definitionsgemäss Werte zwischen 0 und 1 annehmen. Das Streufeld ist jener Teil des vom Sender emittierten magnetischen Feldes, der nicht durch die Empfangsspule geht.

Das vorgeschlagene kontaktlose Energieübertragungssystem umfasst insbesondere keine magnetischen Kerne, die bei der Energieübertragung einander berühren. Das heisst, zwischen der Sendespule und der Empfangsspule befindet sich während der Energieübertragung ein durchgehender Luftspalt beziehungsweise andere Stoffe mit einer Permeabilitätszahl µᵣ < 1,01. In Anwendungen zum Laden eines Elektrokraftfahrzeugs kann der Abstand zwischen Sender und Empfänger insbesondere zwischen 10 mm und 250 mm betragen.

In Anwendungen zum Laden eines Elektrokraftfahrzeugs ist für den Sender auch der Begriff "Ground Pad Module" und für den Empfänger der Begriff "Car Pad Module" gebräuchlich.

Ein Wicklung weist generell mehrere Windungen eines Stromleiters oder mehrerer Stromleiter auf. Jeder Stromleiter wird somit um einen Winkel α > 360° gewunden. Ein Stromleiter weist im Verlauf der Wicklung insbesondere im Wesentlichen konstanten/identischen Querschnitt auf.

Weitere vorteilhafte Ausgestaltungen und Weiterbildungen der Erfindung ergeben sich aus den Unteransprüchen sowie aus der Beschreibung in Zusammenschau mit den Figuren.

Günstig ist es, wenn die Windungen der Wicklung in den Ecken des Ringbereichs alle im Wesentlichen denselben Radius aufweisen. Auf diese Weise ist die Kopplung zu einer Empfangsspule besonders gross, beziehungsweise ist ein von der Sendespule emittiertes Streufeld besonders klein.

Günstig ist es weiterhin, wenn benachbarte Windungen der Wicklung auf der längeren Seite des aussenliegenden Rechtecks einen grösseren Abstand zueinander aufweisen als auf dessen kürzerer Seite. Auf diese Weise können unterschiedliche Breiten des von der Wicklung belegten Ringbereichs auf einfache Weise hergestellt werden. Insbesondere ist es dabei von Vorteil, wenn benachbarte Windungen der Wicklung auf der längeren Seite des aussenliegenden Rechtecks zueinander beabstandet sind und auf dessen kürzerer Seite einander berühren. Dadurch wird der Ringbereich auf der kürzeren Seite des äusseren Rechtecks besonders schmal.

Vorteilhaft ist es weiterhin, wenn benachbarte Windungen der Wicklung auf der längeren Seite und der kürzeren Seite des aussenliegenden Rechtecks alle einander berühren. Auf diese Weise ist die Sendespule besonders kompakt aufgebaut. Insbesondere bei übereinander liegenden Lagen sind einander berührende Windungen von Vorteil, weil die Sendespule dadurch mechanisch sehr stabil ist und daher in Ladeanwendungen für Elektrokraftfahrzeuge sicher von einem solchen überfahrbar ist. Zudem kann ein guter thermischer Ausgleich zwischen den Windungen erfolgen. Denkbar ist aber auch, dass benachbarte Windungen der Wicklung auf der längeren Seite und der kürzeren Seite des aussenliegenden Rechtecks alle im Wesentlichen voneinander gleich beabstandet sind.

Besonders vorteilhaft ist es auch, wenn der Querschnitt des zumindest einen Stromleiters der Wicklung auf der längeren Seite des aussenliegenden Rechtecks breiter ist als auf der kürzeren Seite des aussenliegenden Rechtecks. Dies stellt eine weitere elegante Massnahme dar, bei einer Sendespule unterschiedliche Breiten des von der Wicklung belegten Ringbereichs vorzusehen. Beispielsweise kann der Stromleiter auf der kürzeren Seite des aussenliegenden Rechtecks kreisförmig oder quadratisch und auf der längeren Seite oval oder rechteckig sein. Insbesondere ist es dabei von Vorteil, wenn die Querschnittsfläche des zumindest einen Stromleiters auf der längeren Seite des aussenliegenden Rechtecks im Wesentlichen gleich gross ist wie auf der kürzeren Seite des aussenliegenden Rechtecks. Die Sendespule kann dann beispielsweise dadurch hergestellt werden, dass die Wicklung auf der längeren Seite des aussenliegenden Rechtecks plattgedrückt wird.

In einer weiteren vorteilhaften Ausgestaltung der Sendespule weist die Wicklung auf der längeren Seite des aussenliegenden Rechtecks weniger Lagen auf als auf dessen kürzerer Seite, insbesondere halb so viele Lagen. Dies stellt eine weitere elegante Massnahme dar, bei einer Sendespule unterschiedliche Breiten des von der Wicklung belegten Ringbereichs vorzusehen. Insbesondere ist es dabei von Vorteil, wenn die Wicklung auf der längeren Seite des aussenliegenden Rechtecks einlagig und auf dessen kürzerer Seite zweilagig ausgebildet ist. Die Sendespule ist dann besonders flach. Sofern die übereinander liegenden Windungen auf der Schmalseite des aussenliegenden Rechtecks einander berühren, ist die Sendespule auch mechanisch ausserordentlich stabil und kann sicher von einem Kraftfahrzeug überfahren werden. Im Bereich übereinander liegender Lagen kann zudem ein guter thermischer Ausgleich innerhalb der Wicklung stattfinden. Besonders vorteilhaft ist es auch, wenn die Wicklung mehrere Stromleiter aufweist und insbesondere bifilar ausgebildet ist. Dadurch lässt sich eine Spule, die auf der Schmalseite und der Längsseite des aussenliegenden Rechtecks eine unterschiedliche Anzahl an Lagen aufweist, besonders gut herstellen. Zudem ermöglicht eine Sendespule mit mehreren Stromleitern prinzipiell auch den Einsatz von mehreren verschiedenen und unabhängig voneinander schalt- und/oder steuerbaren Stromversorgungen. Beispielsweise kann eine Sendespule mit drei Stromleitern an drei verschiedene und unabhängig voneinander schalt- und/oder steuerbare Stromversorgungen angeschlossen sein. Insbesondere kann die Wicklung auf der kürzeren Seite des aussenliegenden Rechtecks dreimal so viele Lagen aufweist wie auf dessen längeren Seite. Bei einer bifilar gewickelten Sendespule ist es wiederum von Vorteil, wenn die Wicklung auf der längeren Seite des aussenliegenden Rechtecks halb so viele Lagen aufweist wie auf dessen kürzerer Seite. Prinzipiell ist das Verhältnis zwischen den unterschiedlichen Breiten des Ringbereichs, der von der Wicklung belegt ist, jedoch nicht an eine bestimmte Anzahl an Stromleitern gebunden. Das heisst, dass beispielsweise auch eine Wicklung mit drei Stromleitern auf der längeren Seite des aussenliegenden Rechtecks (im Wesentlichen) halb so viele Lagen aufweisen kann wie auf dessen kürzerer Seite. Umgekehrt kann beispielsweise auch eine bifilare Wicklung auf der kürzeren Seite des aussenliegenden Rechtecks (im Wesentlichen) dreimal so viele Lagen aufweisen wie auf dessen längeren Seite.

Besonders vorteilhaft ist es weiterhin, wenn die Stromleiter der Wicklung in den Ecken des Ringbereichs um jeweils 90° gegeneinander verdreht werden. Auf diese Weise lässt sich eine Sendespule, bei der die Wicklung auf der kürzeren Seite des aussenliegenden Rechtecks mehr Lagen aufweist als auf dessen längerer Seite, besonders gut herstellen.

Besonders vorteilhaft ist es, wenn die Verdrehung der Stromleiter der Wicklung in jeder Ecke des Ringbereichs jeweils abwechselnden Drehsinn aufweist. Dadurch ist die Sendespule auf einfache Weise herstellbar. Vorteilhaft ist es aber auch, wenn die Verdrehung der Stromleiter der Wicklung in jeder Ecke des Ringbereichs jeweils den gleichen Drehsinn aufweist. Auf diese Weise sind die beiden Stromleiter der Wicklung im Wesentlichen gleich lang und weisen die gleiche Induktivität auf. Zudem ist jeder Stromleiter in gleichem Mass auf der der Empfangsspule zugewandten Seite der Sendespule und hat dadurch die gleiche Kopplung zur Empfangsspule.

Generell ist es von Vorteil, wenn ein in einen Querschnitt des zumindest einen Stromleiters eingeschriebener Innkreis in einem Bereich von 2 mm bis inklusive 8 mm liegt. Dadurch ist der Querschnitt zur Führung von der bei der Ladung eines Elektrofahrzeugs üblicherweise auftretenden Strömen gut geeignet. Der Stromleiter kann beispielsweise kreisförmig, oval oder auch rechteckig sein. Ist der Querschnitt kreisförmig, dann entspricht der genannte Innkreis direkt der Kontur des Querschnitts. Ein Stromleiter mit rechteckigem Querschnitt kann insbesondere 2 mm hoch und 8 mm breit sein. Der Durchmesser des Innkreises beträgt in diesem Fall 2 mm.

Generell ist es auch von Vorteil, wenn die längere Seite des aussenliegenden Rechtecks in einem Bereich von 400 mm bis inklusive 800 mm und/oder die kürzere Seite des aussenliegenden Rechtecks in einem Bereich von 200 mm bis inklusive 600 mm liegt. Dadurch eignet sich die Sendespule von ihrer Dimension her gut für die Ladung eines Akkumulators in einem Kraftfahrzeug

An dieser Stelle wird angemerkt, dass sich die zu der Sendespule offenbarten Varianten und die daraus resultierenden Vorteile gleichermassen auf den offenbarten Sender und das offenbarte Energieübertragungssystem beziehen und umgekehrt.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind. Dabei können die in den Ansprüchen und in der Beschreibung erwähnten Merkmale jeweils einzeln für sich oder in beliebiger Kombination erfindungswesentlich sein.

Die Bezugszeichenliste ist Bestandteil der Offenbarung. Die Figuren werden zusammenhängend und übergreifend beschrieben. Gleiche Bezugszeichen bedeuten gleiche Bauteile, Bezugszeichen mit unterschiedlichen Indizes geben funktionsgleiche oder ähnliche Bauteile an.

Es zeigen dabei:
- Fig. 1: ein erstes Beispiel einer rechteckigen Sendespule;
- Fig. 2: ähnlich wie Fig. 1, jedoch mit konstantem Radius der Stromleiter in den Ecken der Sendespule;
- Fig. 3: ein Beispiel einer bifilar gewickelten Sendespule mit verdrillten Stromleitern;
- Fig. 4: ähnlich wie Fig. 3, jedoch mit im Wesentlichen parallel geführten Stromleitern;
- Fig. 5: eine Draufsicht auf eine rechteckige Sendespule, bei welcher der Stromleiter auf der Längsseite breiter ist als auf der Schmalseite;
- Fig. 6: einen Schrägschnitt durch die Längsseite der Spule aus Fig. 6;
- Fig. 7: einen Schrägschnitt durch die Schmalseite der Spule aus Fig. 6;
- Fig. 8: einen Sender mit einer bifilar gewickelten Sendespule und zwei daran angeschlossenen Stromversorgungen und
- Fig. 9: ein beispielhaftes Energieübertragungssystem bei einem Kraftfahrzeug.

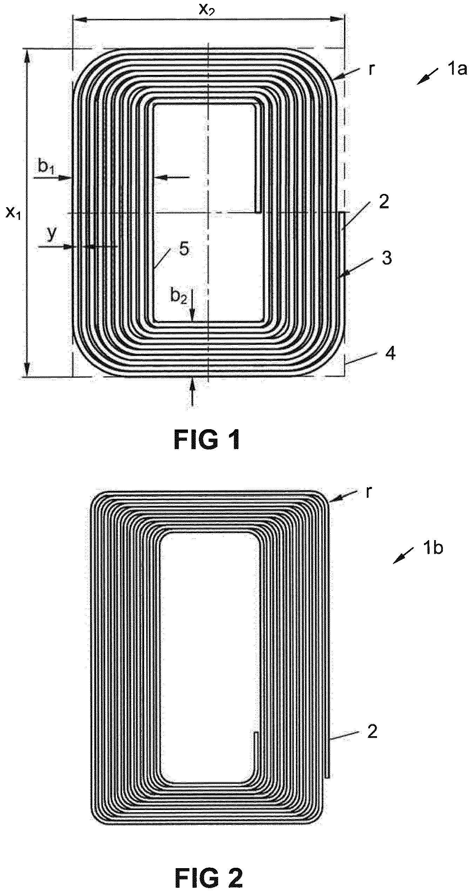

Fig. 1 zeigt ein erstes Beispiel einer Sendespule 1a für ein kontaktloses Energieübertragungssystem, umfassend eine Wicklung 2 mit mehreren Windungen eines Stromleiters. Die Wicklung 2 belegt dabei einen Ringbereich 3 zwischen einem aussenliegenden grösseren ungleichseitigen Rechteck 4 und einem innenliegenden, kleineren, ungleichseitigen Rechteck 5. Auf der längeren Seite x₁ des aussenliegenden Rechtecks 4 ist der Ringbereich 3 breiter als auf der kürzeren x₂ Seite des aussenliegenden Rechtecks 4. Das heisst, es gilt x₁>x₂ und b₁>b₂. Mit anderen Worten bedeutet dies, dass die Breitendifferenz zwischen dem inneren Rechteck 5 und dem äusseren Rechteck 4 grösser als die die Höhendifferenz zwischen den beiden. Vorteilhaft können damit die Kopplung zu einer Empfangsspule (in Fig. 1 nicht dargestellt) verbessert und Streufelder verringert werden.

In der Fig. 1 weist der Stromleiter der Wicklung 2 in den Ecken des Ringbereichs 3 unterschiedlichen, konkret nach aussen grösser werdenden Radius r auf. Dies ist aber nicht zwingend. Vorteilhaft ist es vielmehr, wenn die Windungen der Wicklung 2 in den Ecken des Ringbereichs 3 alle im Wesentlichen denselben Radius r aufweisen, so wie dies für die beispielhafte und in der Fig. 2 dargestellte Sendespule 1b der Fall ist. Auf diese Weise können die Kopplung noch weiter verbessert und die Streufelder noch weiter verringert werden.

In den in den Figuren 1 und 2 dargestellten Sendespulen 1a, 1b weisen benachbarte Windungen der Wicklung 2 auf der längeren Seite des aussenliegenden Rechtecks 4 einen grösseren Abstand zueinander auf als auf dessen kürzerer Seite. Konkret weisen benachbarte Windungen der Wicklung 2 in den dargestellten Beispielen auf der längeren Seite x₁ des aussenliegenden Rechtecks 4 den Abstand y zueinander auf und berühren einander auf der kürzerer Seite x₂ des aussenliegenden Rechtecks 4 . Prinzipiell ist es aber auch möglich, dass benachbarte Windungen der Wicklung 2 auf der kürzeren Seite x₂ des aussenliegenden Rechtecks 4 voneinander beabstandet sind und vorteilhaft dann einen Abstand kleiner y zueinander aufweisen.

Ein weiteres Merkmal der in den Figuren 1 und 2 dargestellten Sendespulen 1a, 1b ist, dass diese einlagig ausgeführt sind. Auch dies ist kein zwingendes Merkmal. Denkbar ist vielmehr auch, dass diese mehrlagig ausgeführt sind.

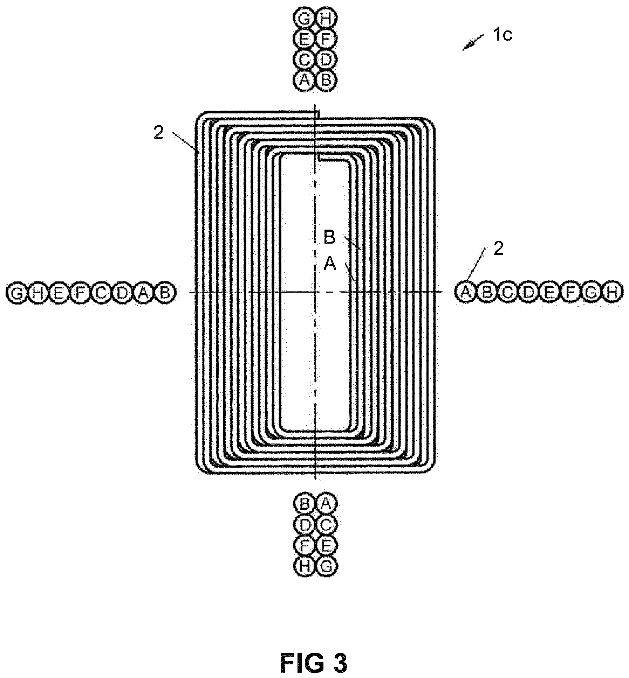

Von Vorteil ist es insbesondere, wenn die Wicklung 2 auf der längeren Seite x₁ des aussenliegenden Rechtecks 4 weniger Lagen aufweist als auf dessen kürzerer Seite x₂, insbesondere halb so viele Lagen. Fig. 3 zeigt dazu ein Beispiel, bei dem die Wicklung 2 auf der längeren Seite x₁ des aussenliegenden Rechtecks 4 einlagig und auf dessen kürzerer Seite x₂ zweilagig ausgebildet ist. Dies stellt eine besonders elegante Möglichkeit dar, unterschiedliche Breiten b₁ und b₂ des Ringbereichs 3 herzustellen.

Vorteilhaft ist die die Wicklung 2 wie in dem in Fig. 3 dargestellten Beispiel bifilar ausgebildet. Im Speziellen werden dazu die beiden Stromleiter der bifilaren Wicklung 2 in den Ecken des Ringbereichs 3 um jeweils 90° gegeneinander verdreht. Vorteilhaft ist es weiterhin, wenn die Verdrehung der beiden Stromleiter der bifilaren Wicklung 2, wie in der Fig. 3 dargestellt ist, in jeder Ecke des Ringbereichs 3 jeweils den gleichen Drehsinn aufweist. Auf diese Weise werden die beiden Stromleiter der bifilaren Wicklung 2 gegeneinander verdrillt.

In der Fig. 3 ist in der Verlängerung der Achsen jeweils ein vergrösserter Querschnitt durch die Wicklung 2 dargestellt, wobei die einzelnen Windungen mit den Buchstaben A..H bezeichnet sind, um deren Lage in den einzelnen Querschnitten darzustellen. Nach vollen 360° wird die Wicklung A mit C, dann mit E und dann mit G bezeichnet. Dementsprechend wird die Wicklung B nach vollen 360° mit D, dann mit F und dann mit H bezeichnet, um in den Schnitten eine eindeutige Zuordnung zu ermöglichen

Beginnend mit der Achse auf 3-Uhr liegen die Windungen A..H von innen beginnend in aufsteigender Reihenfolge nebeneinander. Auf 6-Uhr liegt die Windung B über A, D über C, F über E und H über G. Auf 9-Uhr liegen die Windungen alternierend nebeneinander, von innen beginnend also in der Reihenfolge B, A, D, C, F, E, H, G. Auf 12-Uhr liegt die Windung A über B, C über D, E über F und G über H.

Vorteilhaft weisen die beiden Stromleiter der Wicklung 2 bei dieser Art der 90°-Verdrehung in den Ecken wegen der dadurch entstehenden Verdrillung im Wesentlichen die gleiche Länge und die gleiche Induktivität auf. Zudem ist jeder Stromleiter in gleichem Mass auf einer Seite der Sendespule 1d, welche einer Empfangsspule zugewandt ist. Dadurch weisen beide Stromleiter die gleiche Kopplung zu dieser Empfangsspule auf.

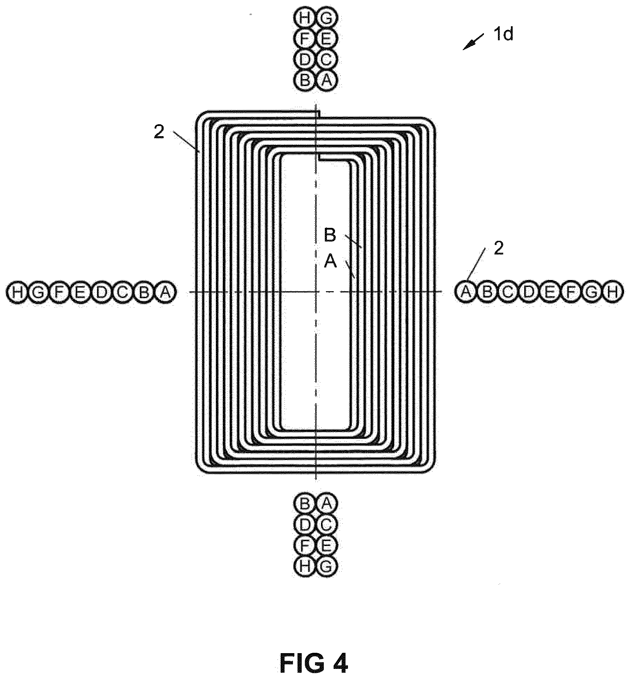

Fig. 4 zeigt nun ein Beispiel einer Sendespule 1d, welche der in Fig. 3 dargestellten Sendespule 1c sehr ähnlich ist. Im Unterschied dazu weist die Verdrehung der beiden Stromleiter der bifilaren Wicklung 2 in jeder Ecke des Ringbereichs 3 aber jeweils abwechselnden Drehsinn auf. Gesamt gesehen liegt bei dieser Ausführungsform keine Verdrillung der beiden Stromleiter vor, sondern diese liegen im Wesentlichen nebeneinander, mal horizontal und mal vertikal.

Beginnend mit der Achse auf 3-Uhr liegen die Windungen A..H von innen beginnend wiederum in aufsteigender Reihenfolge nebeneinander. Auf 6-Uhr liegt die Windung B über A, D über C, F über E und H über G. Auf 9-Uhr liegen die Windungen A..H von innen beginnend wiederum in aufsteigender Reihenfolge nebeneinander, und auf 12-Uhr liegt wiederum die Windung B über A, D über C, F über E und H über G.

Bei den Beispielen der Sendespulen 1c, 1d, die in den Figuren 3 und 4 dargestellt sind, berühren benachbarte Windungen der Wicklung 2 auf der längeren Seite x₁ und der kürzeren Seite x₂ des aussenliegenden Rechtecks 4 einander. Denkbar wäre natürlich auch, dass die Windungen voneinander beabstandet sind, insbesondere gleich weit voneinander. Generell kann im Bereich übereinander liegender Lagen ein guter thermischer Ausgleich innerhalb der Wicklung 2 stattfinden.

In den bisher dargestellten Beispielen ist die Querschnittsfläche des Stromleiters / der Stromleiter der Wicklung 2 auf der längeren Seite x₁ des aussenliegenden Rechtecks 4 im Wesentlichen gleich gross wie auf der kürzeren Seite x₂ des aussenliegenden Rechtecks 4. Dies ist zwar vorteilhaft aber nicht zwingend. Möglich ist vielmehr auch, dass die Querschnittsfläche auf der längeren Seite x₁ und auf der kürzeren Seite x₂ des aussenliegenden Rechtecks 4 unterschiedlich gross ist.

In den bisher dargestellten Beispielen ist auch die Form der Querschnittsfläche auf der längeren Seite x₁ und auf der kürzeren Seite x₂ des aussenliegenden Rechtecks 4 gleich. In einer weiteren vorteilhaften Ausführungsform einer Sendespule ist jedoch der Querschnitt Q des zumindest einen Stromleiters der Wicklung 2 auf der längeren Seite x₁ des aussenliegenden Rechtecks 4 breiter als auf der kürzeren Seite x₂.

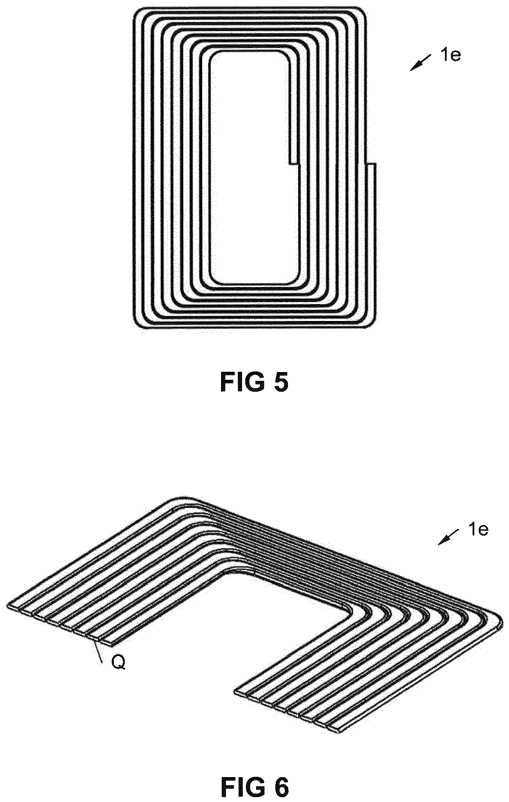

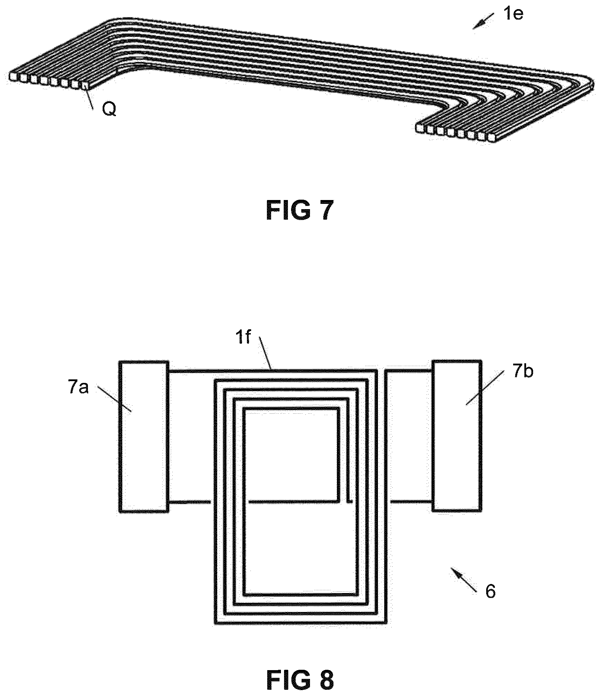

Die Figuren 5 bis 7 zeigen dazu ein Beispiel einer Sendespule 1e, die Fig. 5 in Draufsicht, die Fig. 6 im Schrägschnitt durch die längere Seite x₁ des aussenliegenden Rechtecks 4 und die Fig. 7 im Schrägschnitt durch die kürzere Seite x₂ des aussenliegenden Rechtecks 4. Aus den Figuren 5 bis 7 geht hervor, dass der Querschnitt Q des Stromleiters der Wicklung 2 auf der längeren Seite x₁ des aussenliegenden Rechtecks 4 breiter und flacher ist als auf der kürzeren Seite x₂. Insbesondere ist der Querschnitt Q auf der kürzeren Seite x₂ quadratisch und auf der längeren Seite x₁ rechteckig. Beispielsweise kann die Wicklung 2 auf der längeren Seite x₁ des aussenliegenden Rechtecks 4 plattgedrückt sein, etwa mit Hilfe einer Presse. Denkbar sind beispielsweise auch kreisförmige Querschnitte Q auf der kürzeren Seite x₂ des aussenliegenden Rechtecks 4 und ovale Querschnitte auf dessen längerer Seite x₁.

Im Hinblick auf die Grösse einer Sendespule 1a..1e ist es generell von Vorteil, wenn die längere Seite x₁ des aussenliegenden Rechtecks 4 in einem Bereich von 400 mm bis inklusive 800 mm und/oder die kürzere Seite x₂ des aussenliegenden Rechtecks 4 in einem Bereich von 200 mm bis inklusive 600 mm liegt. Für die Grösse des Querschnitts Q ist es generell von Vorteil, wenn ein in den Querschnitt Q des Stromleiters eingeschriebener Innkreis in einem Bereich von 2 mm bis inklusive 8 mm liegt. Ist der Querschnitt kreisförmig, dann entspricht der genannte Innkreis direkt der Kontur des Querschnitts. Ein Stromleiter mit rechteckigem Querschnitt kann insbesondere 2 mm hoch und 8 mm breit sein. Der Durchmesser des Innkreises beträgt in diesem Fall 2 mm.

Die Fig. 8 zeigt nun einen Sender 6 mit einer Sendespule 1f, bei dem die beiden Stromleiter einer bifilaren Wicklung 2 an zwei verschiedene und unabhängig voneinander schalt- und/oder steuerbare Stromversorgungen 7a, 7b angeschlossen sind. Auf diese Weise kann die über die Sendespule 1f übertragene Leistung gut eingestellt werden, indem entweder nur eine oder beide Stromversorgungen 7a, 7b betrieben werden. Durch die Abschaltung einer der beiden Stromversorgungen 7a, 7b können die Verluste bei kleinen Übertragungsleistungen gering gehalten werden.

Das Prinzip mehrerer verwendeter Stromleiter wurde in den Figuren 3, 4 und 8 der Einfachheit halber lediglich für eine bifilare Wicklung 2 dargestellt. Selbstverständlich ist die technische Lehre aber auch auf eine andere Anzahl an Stromleitern anwendbar. Beispielsweise können vier Stromversorgungen an ein Sendespule mit vier Stromleitern angeschlossen werden. Die vier Stromleiter können in Analogie der in den Figuren 3 und 4 dargestellten Sendespulen 1c, 1d auf der längeren Seite x₁ des aussenliegenden Rechtecks 4 einlagig und auf dessen kürzerer Seite x₂ vierlagig ausgebildet sein. Ein solches fix vorgegebenes Verhältnis zwischen der Anzahl der Lagen auf der längeren Seite x₁ und der Anzahl der Lagen auf der kürzerer Seite x₂ des aussenliegenden Rechtecks 4 anhand der Anzahl der Stromleiter ist jedoch nicht zwingend. Eine Sendespule mit mehreren Stromleitern kann im Wesentlichen jedes beliebige Verhältnis zwischen der Anzahl der Lagen auf der längeren Seite x₁ und der Anzahl der Lagen auf der kürzerer Seite x₂ des aussenliegenden Rechtecks 4 aufweisen.

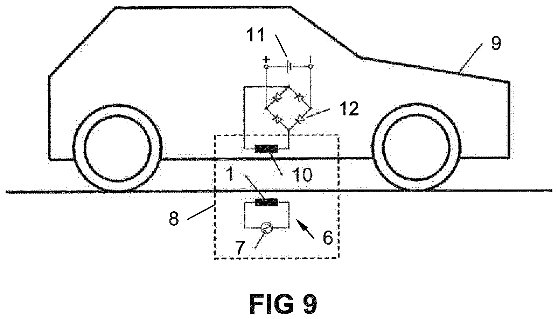

Fig. 9 zeigt schliesslich ein Energieübertragungssystem 8, mit einer Sendespule 1 beziehungsweise einem Sender 6 und einer in einem Kraftfahrzeug 9 eingebauten Empfangsspule 10. Aus der Stromversorgung 7 stammende elektrische Energie wird dabei mit Hilfe der Sendespule 1 an die Empfangsspule 10 übertragen, dort mit Hilfe des Gleichrichters 12 gleichgerichtet und schliesslich für die Ladung eines in dem Kraftfahrzeug 9 angeordneten Akkumulators 11 eingesetzt. Auf diese Weise kann also eine Elektrofahrzeug kontaktlos aufgeladen werden.

Generell können für die Anordnungen nach den Figuren 8 und 9 beliebige Sendespulen 1a..1f respektive Kombinationen der dargestellten Ausführungsformen eingesetzt werden. Durch die vorgeschlagenen Massnahmen entstehen vorteilhaft nur geringe Streufelder im Bereich des Fahrzeugs 9, und die Energieübertragung erfolgt mit nur geringen Verlusten.

An dieser Stelle wird auch angemerkt, dass sich die vorgeschlagenen Massnahmen beliebig kombinieren lassen. Beispielsweise kann die Sendespule 1e der Figuren 5 bis 7 auch Merkmale aufweisen, die zu den Figuren 1 bis 4 beschrieben wurden. Auch kann eine Sendespule 1c, 1d der Figuren 3 bis 4 Merkmale aufweisen, die zu den Figuren 1 bis 2 beschrieben wurden, und so weiter.

Abschliessend wird auch angemerkt, dass die dargestellten Anordnungen in der Realität auch mehr Bauteile als dargestellt umfassen können und unter Umständen verzerrt dargestellt sind. Weiterhin wird angemerkt, dass sich die obigen Ausgestaltungen und Weiterbildungen der Erfindung auf beliebige Art und Weise kombinieren lassen.

### Bezugszeichenliste

- 1, 1a..1f: Sendespule
- 2: Wicklung
- 3: Ringbereich
- 4: äusseres Rechteck
- 5: inneres Rechteck
- 6: Sender
- 7, 7a, 7b: Stromversorgung
- 8: Energieübertragungssystem
- 9: Kraftfahrzeug
- 10: Empfangsspule
- 11: Akkumulator
- 12: Gleichrichter
- A..H: Windung
- b₁: Breite Ringbereich bei x₁
- b₂: Breite Ringbereich bei x₂
- Q: Querschnitt Stromleiter
- r: Radius Stromleiter
- x₁: Länge äussereres Rechteck
- x₂: Breite äussereres Rechteck
- y: Abstand Stromleiter

## Patentansprüche

1. Sendespule (1, 1a..1f) für ein kontaktloses Energieübertragungssystem (8) zur Ladung eines in einem Kraftfahrzeug angeordneten Akkumulators, umfassend eine Wicklung (2) mit mehreren Windungen zumindest eines Stromleiters, welche einen Ringbereich (3) zwischen einem aussenliegenden grösseren ungleichseitigen Rechteck (4) und einem innenliegenden, kleineren, ungleichseitigen Rechteck (5) belegt,
**dadurch gekennzeichnet, dass**
der Ringbereich (3) auf der längeren Seite (x₁) des aussenliegenden Rechtecks (4) breiter ist als auf dessen kürzerer Seite (x₂).

2. Sendespule (1, 1a..1f) nach Anspruch 1, **dadurch gekennzeichnet, dass** die Windungen der Wicklung (2) in den Ecken des Ringbereichs (3) alle im Wesentlichen denselben Radius (r) aufweisen.

3. Sendespule (1, 1a..1f) nach Anspruch 1 oder 2, **dadurch gekennzeichnet, dass** benachbarte Windungen der Wicklung (2) auf der längeren Seite des aussenliegenden Rechtecks (4) einen grösseren Abstand zueinander aufweisen als auf dessen kürzerer Seite.

4. Sendespule (1, 1a..1f) nach Anspruch 1 oder 2, **dadurch gekennzeichnet, dass** benachbarte Windungen der Wicklung (2) auf der längeren Seite (x₁) des aussenliegenden Rechtecks (4) zueinander beabstandet sind und auf dessen kürzerer Seite (x₂) einander berühren.

5. Sendespule (1, 1a..1f) nach Anspruch 1 oder 2, **dadurch gekennzeichnet, dass** benachbarte Windungen der Wicklung (2) auf der längeren Seite (x₁) und der kürzeren Seite (x₂) des aussenliegenden Rechtecks (4) alle im Wesentlichen voneinander gleich beabstandet sind oder einander berühren.

6. Sendespule (1, 1a..1f) nach einem der Ansprüche 1 bis 5, **dadurch gekennzeichnet, dass** der Querschnitt (Q) des zumindest einen Stromleiters der Wicklung (2) auf der längeren Seite (x₁) des aussenliegenden Rechtecks (4) breiter ist als auf der kürzeren Seite (x₂) des aussenliegenden Rechtecks (4).

7. Sendespule (1, 1a..1f) nach Anspruch 6, **dadurch gekennzeichnet, dass** die Querschnittsfläche des zumindest einen Stromleiters der Wicklung (2) auf der längeren Seite (x₁) des aussenliegenden Rechtecks (4) im Wesentlichen gleich gross ist wie auf der kürzeren Seite (x₂) des aussenliegenden Rechtecks (4).

8. Sendespule (1, 1a..1f) nach einem der Ansprüche 1 bis 7, **dadurch gekennzeichnet, dass** die Wicklung (2) auf der längeren Seite (x₁) des aussenliegenden Rechtecks (4) weniger Lagen aufweist als auf dessen kürzerer Seite (x₂).

9. Sendespule (1, 1a..1f) nach Anspruch 8, **dadurch gekennzeichnet, dass** die Wicklung (2) auf der längeren Seite (x₁) des aussenliegenden Rechtecks (4) einlagig und auf dessen kürzerer Seite (x₂) zweilagig ausgebildet ist.

10. Sendespule (1, 1a..1f) nach einem der Ansprüche 1 bis 9, **dadurch gekennzeichnet, dass** die Wicklung (2) mehrere Stromleiter aufweist.

11. Sendespule (1, 1a..1f) nach Anspruch 10, **dadurch gekennzeichnet, dass** die Stromleiter der Wicklung (2) in den Ecken des Ringbereichs (3) um jeweils 90° gegeneinander verdreht sind.

12. Sendespule (1, 1a..1f) nach Anspruch 11, **dadurch gekennzeichnet, dass** die Verdrehung der Stromleiter der Wicklung (2) in jeder Ecke des Ringbereichs (3) jeweils abwechselnden Drehsinn aufweist.

13. Sendespule (1, 1a..1f) nach Anspruch 11, **dadurch gekennzeichnet, dass** die Verdrehung der Stromleiter der Wicklung (2) in jeder Ecke des Ringbereichs (3) jeweils den gleichen Drehsinn aufweist.

14. Sendespule (1, 1a..1f) nach einem der Ansprüche 1 bis 13, **dadurch gekennzeichnet, dass** ein in einen Querschnitt (Q) des zumindest einen Stromleiters eingeschriebener Innkreis in einem Bereich von 2 mm bis inklusive 8 mm liegt.

15. Sendespule (1, 1a..1f) nach einem der Ansprüche 1 bis 14, **dadurch gekennzeichnet, dass** die längere Seite (x₁) des außenliegenden Rechtecks (4) in einem Bereich von 400 mm bis inklusive 800 mm und/oder die kürzere Seite (x₂) des außenliegenden Rechtecks (4) in einem Bereich von 200 mm bis inklusive 600 mm liegt.

16. Sender (6) eines Energieübertragungssystems (8), umfassend eine Sendespule (1, 1a..1f) nach einem der Ansprüche 10 bis 15, **dadurch gekennzeichnet, dass** die Stromleiter der Wicklung (2) an mehrere verschiedene und unabhängig voneinander schalt- und/oder steuerbare Stromversorgungen (7, 7a, 7b) angeschlossen sind.

17. Energieübertragungssystem (8), **gekennzeichnet durch** eine Sendespule (1, 1a.. 1f) nach einem der Ansprüche 1 bis 15 oder einen Sender (6) nach Anspruch 16 sowie eine in ein Kraftfahrzeug (9) einbaubare Empfangsspule (10).

18. Verwendung einer Sendespule (1, 1a..1f) nach einem der Ansprüche 1 bis 15 oder eines Senders (6) nach Anspruch 16 zur Ladung eines in einem Kraftfahrzeug (9) angeordneten Akkumulators (11).

## Claims

1. A transmission coil (1, 1a...1f) for a contactless energy transmission system (8) for charging a battery arranged in a motor vehicle, comprising a winding (2) with a plurality of turns of at least one current conductor, which occupies an annular region (3) between an outer, larger oblong area (4) and an inner, smaller oblong area (5),
**characterized in that**
the annular region (3) on the longer side (x₁) of the outer oblong area (4) is wider than on the shorter side (x₂) thereof.

2. The transmission coil (1, 1a...1f) according to claim 1, **characterized in that** the turns of the winding (2) all have substantially the same radius (r) in the corners of the annular region (3).

3. The transmission coil (1, 1a...1f) according to claim 1 or 2, **characterized in that** adjacent turns of the winding (2) are at a greater distance from each other on the longer side of the outer oblong area (4) than on the shorter side thereof.

4. The transmission coil (1, 1a...1f) according to claim 1 or 2, **characterized in that** adjacent turns of the winding (2) are at a distance from each other on the longer side (x₁) of the outer oblong area (4), and touch each other on the shorter side (x₂) thereof.

5. The transmission coil (1, 1a...1f) according to claim 1 or 2, **characterized in that** adjacent turns of the winding (2) on the longer side (x₁) and on the shorter side (x₂) of the outer oblong area (4) are all substantially equidistant from each other or are touching each other.

6. The transmission coil (1, 1a...1f) according to any one of claims 1 to 5, **characterized in that** the cross section (Q) of the at least one current conductor of the winding (2) is wider on the longer side (x₁) of the outer oblong area (4) than on the shorter side (x₂) of the outer oblong area (4).

7. The transmission coil (1, 1a...1f) according to claim 6, **characterized in that** the cross-sectional area of the at least one current conductor of the winding (2) is substantially the same size on the longer side (x₁) of the outer oblong area (4) and on the shorter side (x₂) of the outer oblong area (4).

8. The transmission coil (1, 1a...1f) according to any one of claims 1 to 7, **characterized in that** the winding (2) has fewer layers on the longer side (x₁) of the outer oblong area (4) than on the shorter side (x₂) thereof.

9. The transmission coil (1, 1a...1f) according to claim 8, **characterized in that** the winding (2) consists of a single layer on the longer side (x₁) of the outer oblong area (4) and consists of two layers on the shorter side (x₂) thereof.

10. The transmission coil (1, 1a...1f) according to any one of claims 1 to 9, **characterized in that** the winding (2) comprises a plurality of current conductors.

11. The transmission coil (1, 1a...1f) according to claim 10, **characterized in that** the current conductors of the winding (2) are twisted by 90° with respect to each other at each corner of the annular region (3).

12. The transmission coil (1, 1a...1f) according to claim 11, **characterized in that** the twist of the current conductors of the winding (2) is alternately in opposite directions of rotation at each corner of the annular region (3).

13. The transmission coil (1, 1a...1f) according to claim 11, **characterized in that** the twist of the current conductors of the winding (2) is in the same direction of rotation at each corner of the annular region (3).

14. The transmission coil (1, 1a...1f) according to any one of claims 1 to 13, **characterized in that** an incircle inscribed in a cross-section (Q) of the at least one current conductor lies in a range from 2 mm to 8 mm inclusively.

15. The transmission coil (1, 1a...1f) according to any one of claims 1 to 14, **characterized in that** the longer side (x₁) of the outer oblong area (4) is in a range from 400 mm to 800 mm inclusively, and/or the shorter side (x₂) of the outer oblong area (4) is in a range from 200 mm to 600 mm inclusively.

16. The transmitter (6) of an energy transmission system (8) comprising a transmission coil (1, 1a..1f) according to any one of claims 10 to 15, **characterized in that** the current conductors of the winding (2) are connected to several different power supplies (7, 7a, 7b), which are switchable and/or controllable independently of each other.

17. An energy transmission system (8), **characterized by** a transmission coil (1, 1a..1f) according to any one of claims 1 to 15 or a transmitter (6) according to claim 16, and a receiving coil (10) which can be built into a motor vehicle (9).

18. Use of a transmission coil (1, 1a..1f) according to any one of claims 1 to 15 or of a transmitter (6) according to claim 16 to charge a battery (11) arranged in a motor vehicle (9).

## Revendications

1. Bobine émettrice (1, 1a...1f) pour un système de transfert d'énergie sans contact (8) pour charger un accumulateur disposé dans un véhicule automobile, comprenant un enroulement (2) avec plusieurs enroulements d'au moins un conducteur de courant, qui occupe une zone annulaire (3) entre un rectangle irrégulier (4) plus grand situé à l'extérieur et un rectangle irrégulier (5) plus petit situé à l'intérieur,
**caractérisé en ce que**
la zone annulaire (3) est plus large sur le côté plus long (x₁) du rectangle situé à l'extérieur (4) que sur son côté plus court (x₂).

2. Bobine émettrice (1, 1a...1f) selon la revendication 1, **caractérisée en ce que** les enroulements de l'enroulement (2) présente dans les coins de la zone annulaire (3) tous essentiellement le même rayon (r).

3. Bobine émettrice (1, 1a...1f) selon la revendication 1 ou 2, **caractérisée en ce que** des enroulements voisins de l'enroulement (2) sur le côté plus long du rectangle situé à l'extérieur (4) présentent un plus grand espacement les uns par rapport aux autres que sur son côté plus court.

4. Bobine émettrice (1, 1a...1f) selon la revendication 1 ou 2, **caractérisée en ce que** des enroulements voisins de l'enroulement (2) sur le côté plus long (x₁) du rectangle situé à l'extérieur (4) sont espacés les uns par rapport aux autres et se touchent l'un l'autre sur son côté plus court (x₂).

5. Bobine émettrice (1, 1a...1f) selon la revendication 1 ou 2, **caractérisée en ce que** des enroulements voisins de l'enroulement (2) sur le côté plus long (x₁) et le côté plus court (x₂) du rectangle situé à l'extérieur (4) sont tous essentiellement espacés du même espacement les uns par rapport aux autres ou se touchent l'un l'autre.

6. Bobine émettrice (1, 1a...1f) selon une des revendications 1 à 5, **caractérisée en ce que** la section transversale (Q) d'au moins un conducteur de courant de l'enroulement (2) sur le côté plus long (x₁) du rectangle situé à l'extérieur (4) est plus large que sur le côté plus court (x₂) du rectangle situé à l'extérieur (4).

7. Bobine émettrice (1, 1a...1f) selon la revendication 6, **caractérisée en ce que** la surface de section transversale d'au moins un conducteur de courant de l'enroulement (2) sur le côté plus long (x₁) du rectangle situé à l'extérieur (4) est essentiellement de même grandeur que sur le côté plus court (x₂) du rectangle situé à l'extérieur (4).

8. Bobine émettrice (1, 1a...1f) selon une des revendications 1 à 7, **caractérisée en ce que** l'enroulement (2) sur le côté plus long (x₁) du rectangle situé à l'extérieur (4) présente moins de couches que sur son côté plus court (x₂).

9. Bobine émettrice (1, 1a...1f) selon la revendication 8, **caractérisée en ce que** l'enroulement (2) sur le côté plus long (x₁) du rectangle situé à l'extérieur (4) est monocouche et a une configuration bicouche sur son côté plus court (x₂).

10. Bobine émettrice (1, 1a...1f) selon une des revendications 1 à 9, **caractérisée en ce que** l'enroulement (2) présente plusieurs conducteurs de courant.

11. Bobine émettrice (1, 1a...1f) selon la revendication 10, **caractérisée en ce que** les conducteurs de courant de l'enroulement (2) sont tournés l'un contre l'autre de respectivement 90° dans les coins de la zone annulaire (3).

12. Bobine émettrice (1, 1a...1f) selon la revendication 11, **caractérisée en ce que** la torsion des conducteurs de courant de l'enroulement (2) dans chaque coin de la zone annulaire (3) présente respectivement un sens de rotation alterné.

13. Bobine émettrice (1, 1a...1f) selon la revendication 11, **caractérisée en ce que** la torsion des conducteurs de courant de l'enroulement (2) dans chaque coin de la zone annulaire (3) présente respectivement le même sens de rotation.

14. Bobine émettrice (1, 1a...1f) selon une des revendications 1 à 13, **caractérisée en ce que** un cercle intérieur inscrit dans une section transversale (Q) d'au moins un conducteur de courant est compris dans une plage de 2 mm à 8 mm inclus.

15. Bobine émettrice (1, 1a...1f) selon une des revendications 1 à 14, **caractérisée en ce que** le côté plus long (x₁) du rectangle situé à l'extérieur (4) est compris dans une plage de 400 mm à 800 mm inclus et/ou le côté plus court (x₂) du rectangle situé à l'extérieur (4) est compris dans une plage de 200 mm à 600 mm inclus.

16. Emetteur (6) d'un système de transfert d'énergie (8), comprenant une bobine émettrice (1, 1a...1f) selon une des revendications 10 à 15, **caractérisé en ce que** les conducteurs de courant de l'enroulement (2) sont raccordés à plusieurs alimentations électriques (7, 7a, 7b) différentes et pouvant être commandées et/ou commutées indépendamment les unes des autres.

17. Système de transfert d'énergie (8), **caractérisé par** une bobine émettrice (1, 1a...1f) selon une des revendications 1 à 15 ou un émetteur (6) selon la revendication 16 ainsi qu'une bobine réceptrice (10) pouvant être montée dans un véhicule automobile (9).

18. Utilisation d'une bobine émettrice (1, 1a...1f) selon une des revendications 1 à 15 ou d'un émetteur (6) selon la revendication 16 pour charger un accumulateur (11) disposé dans un véhicule automobile (9).
